# EUROPEAN PATENT SPECIFICATION

(11) **EP 1 978 130 B1**
(45) Date of publication and mention of the grant of the patent: **11.08.2010**
(21) Application number: 08005055.2
(22) Date of filing: 18.03.2008
(51) Int. Cl.: C23C 22/06, C23C 22/56, B32B 15/06, B32B 15/20

(54) **Rubber member including aluminum-based metal component, and production method for the same**
Kautschukelement mit einer Metallkomponente auf Aluminiumbasis und zugehöriges Herstellungsverfahren
Élément de caoutchouc comportant un composant métallique à base d'aluminium, et son procédé de production

(30) Priority: 29.03.2007 JP 2007088937
(43) Date of publication of application: 08.10.2008
(73) Proprietor: TOKAI RUBBER INDUSTRIES, LTD., Komaki-shi, Aichi-ken, 485-8550 (JP)
(72) Inventor: Asano, Eisuke, Komaki-shi Aichi 485-8550 (JP); Sugiura, Takanori, Komaki-shi Aichi 485-8550 (JP); Taguchi, Takehiko, Komaki-shi Aichi 485-8550 (JP); Tohyama, Toyohisa, Komaki-shi Aichi 485-8550 (JP)
(74) Representative: Kuhnen & Wacker

(56) References cited:
- EP-A- 0 924 242
- EP-A- 1 612 294
- US-B1- 6 485 580

## Description

### BACKGROUND OF THE INVENTION

### 1. Field of the Invention

The present invention relates to a production method for a rubber member including an aluminum-based component for use as an automotive bush, an engine mount, an industrial machinery vibration damper or the like.

### 2. Description of the Related Art

In recent years, a rubber member including a rubber and an aluminum-based metal component combined with the rubber is used as a vibration damper such as an automotive bush, an engine mount or an industrial machinery vibration damper, which serves as a connection member for connection between a frame, an engine and other component.

If a surface of the aluminum-based metal component is corroded in an interface between the aluminum-based metal component and the rubber of the rubber member used as the vibration damper, the rubber is liable to be separated from the aluminum-based metal component, so that the rubber member fails to serve its function. For prevention of the corrosion, the surface of the aluminum-based metal component is typically coated with a chromate film chemically formed by a chromate treatment (see, for example, Japanese Unexamined Patent Publication No. HEI6(1994)-179978).

However, crystal water present in the crystal structure of the chromate film is easily removed due to heat applied for vulcanization of the rubber. Therefore, the chromate film is liable to suffer from cracking occurring due to shrinkage thereof and reduction in adhesion to the aluminum-based metal component. In addition, where the aluminum-based metal component is subjected to a diameter reduction process, the chromate film fails to follow deformation of the aluminum-based metal component, suffering from cracking. The cracking reduces the adhesion between the rubber and the aluminum-based metal component, resulting in insufficient corrosion resistance of the aluminum-based metal component.

Further, a treatment agent for the chromate treatment contains hexavalent chromium which adversely affects a human body and the environment. Therefore, an alternative to the chromate treatment is lately employed. However, a film chemically formed by the alternative chemical treatment is generally pale in color, or colorless and transparent, making it difficult to check whether or not the chemical treatment (film forming process) has been performed. This requires improvement from the viewpoint of production control.

In view of the foregoing, it is an object of the present invention to provide a rubber member including an aluminum-based metal component provided with a chemically formed film which is free from deterioration in adhesion to the aluminum-based metal component otherwise occurring due to heat applied for vulcanization of a rubber material, and is excellent in followability to deformation of the aluminum-based metal component. It is another object of the present invention to provide a production method for the rubber member, which makes it easy to visually check the presence of the film on a surface of the aluminum-based metal component.

### SUMMARY OF THE INVENTION

According to a first aspect of the present invention to achieve the aforementioned object, there is provided a rubber member comprising: an aluminum-based metal component composed of one of aluminum and an aluminum alloy; a film (A) chemically formed on a surface of the aluminum-based metal component; and a rubber combined with the aluminum-based metal component with intervention of the chemically formed film (A); wherein the chemically formed film (A) comprises manganese oxide and zirconium oxide, manganese from the manganese oxide being present in a content of 10 to 30 mg/m² on a manganese atom weight basis in the film (A), zirconium from the zirconium oxide being present in a content of 5 to 40 mg/m² on a zirconium atom weight basis in the film (A).

According to a second aspect of the present invention, there is provided a production method for a rubber member including an aluminum-based metal component, the method comprising the steps of: preparing an aluminum-based metal component composed of one of aluminum or an aluminum alloy; chemically forming a film (A) on a surface of the aluminum-based metal component by keeping the surface of the aluminum-based metal component in contact with a treatment agent (B) kept at pH 2.5 to 4 for a period of 1 to 10 minutes; and forming a rubber on the surface of the aluminum-based metal component formed with the film (A). Herein, the chemically formed film (A) comprises manganese oxide and zirconium oxide, manganese from the manganese oxide being present in a content of 10 to 30 mg/m² on a manganese atom weight basis in the film (A), zirconium from the zirconium oxide being present in a content of 5 to 40 mg/m² on a zirconium atom weight basis in the film (A), and the treatment agent (B) comprises 0.1 to 0.3 g/liter of potassium permanganate, and 0.05 to 0.2 g/liter of zircon hydrofluoric acid/hydrogen fluoride containing zircon hydrofluoric acid and hydrogen fluoride in a mass ratio of 1:1.

The inventors of the present invention conducted studies on a method of chemically forming a film on a surface of an aluminum-based metal component in production of a rubber member including the aluminum-based metal component. As a result, the inventors found that the film (A) chemically formed on the surface of the aluminum-based metal component by keeping the surface of the aluminum-based metal component in contact with the treatment agent (B) kept at pH 2.5 to 4 for a period of 1 to 10 minutes is free from deterioration in adhesion to the aluminum-based metal component which may otherwise occur due to heat applied for vulcanization of a rubber material, and is excellent in followability to deformation of the aluminum-based metal component, and the presence of the film can be easily checked. Thus, the inventors have achieved the aforementioned objects, and attained the present invention.

In the inventive rubber member including the aluminum-based metal component, the film (A) chemically formed on the surface of the aluminum-based metal component is free from the deterioration in adhesion to the aluminum-based metal component otherwise occurring due to the heat applied for the vulcanization of the rubber material, and is excellent in followability to the deformation of the aluminum-based metal component. Further, the chemically formed film (A) is pale yellow or yellow. This makes it easy to visually check the presence of the film, thereby obviating the need for performing an inspection to check the presence of the film.

In the inventive production method, the film (A) is chemically formed by keeping the surface of the aluminum-based metal component in contact with the treatment agent (B) kept at pH 2.5 to 4 for a period of 1 to 10 minutes.

Where the potassium permanganate and the zircon hydrofluoric acid/hydrogen fluoride are present in the treatment agent (B) in a concentration ratio of 1:0.5 to 1:1 (g/liter), the film (A) can be chemically formed more efficiently.

Where the treatment agent (B) is kept at a temperature of 35 to 60°C, the chemically formed film (A) is more excellent in followability to the deformation of the aluminum-based metal component.

### BRIEF DESCRIPTION OF THE DRAWINGS

Fig. 1 is a vertical sectional view illustrating a cylindrical bush as a rubber member including an aluminum-based metal component according to one embodiment of the present invention.
Fig. 2 is an enlarged sectional view illustrating major portions of the cylindrical bush.

### DETAILED DESCRIPTION OF PREFERRED EMBODIMENTS

Embodiments of the present invention will hereinafter be described in detail with reference to the attached drawings.

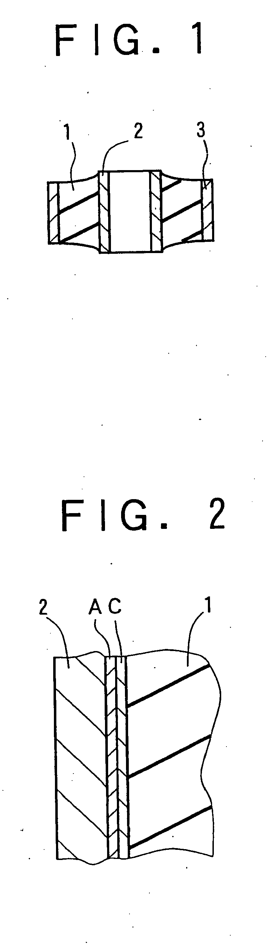

Fig. 1 illustrates a rubber member including an aluminum-based metal component according to one embodiment of the present invention. In this embodiment, a cylindrical automotive bush will be described as an example of the rubber member according to the present invention. The cylindrical bush includes a cylindrical vibration damping rubber 1, a cylindrical inner metal tube (aluminum-based metal component) 2 of aluminum or an aluminum alloy bonded to an inner peripheral surface of the vibration damping rubber 1 coaxially with the vibration damping rubber 1, and a cylindrical outer metal tube (aluminum-based metal component) 3 of aluminum or an aluminum alloy bonded to an outer peripheral surface of the vibration damping rubber 1 coaxially with the vibration damping rubber 1.

In an interface between the inner metal tube 2 and the vibration damping rubber 1, as shown in Fig. 2 on an enlarged scale, a chemically formed film A to be described later in detail according to the present invention is provided on the entire surface of the inner metal tube 2, and an adhesive layer C is provided on an outer surface of the film A. Further, the vibration damping rubber 1 is disposed on an outer surface of the adhesive layer C. In an interface between the outer metal tube 3 and the vibration damping rubber 1, a chemically formed film A and an adhesive layer C are provided as in the interface between the inner metal tube 2 and the vibration damping rubber 1. A feature of the present invention is that the specific chemically formed film A is provided on the surface of the aluminum-based metal component (inner and outer metal tubes 2, 3) in the interface between the rubber (vibration damping rubber 1) and the aluminum-based metal component (inner and outer metal tubes 2, 3) of the rubber member (cylindrical bush).

The chemically formed film A contains manganese oxide and zirconium oxide. In the film A, manganese from the manganese oxide is present in a content of 10 to 30 mg/m² on a manganese atom weight basis, and zirconium from the zirconium oxide is present in a content of 5 to 40 mg/m² on a zirconium atom weight basis.

The manganese content on the manganese atom weight basis is determined in the following manner. The fluorescent X-ray intensities of plural samples having different known manganese concentrations are measured by a fluorescent X-ray analyzer. The fluorescent X-ray intensity is dependent on the content (concentration) of an element to be measured (manganese in this case). Then, a calibration curve (graph) indicating a relationship between the manganese concentration and the fluorescent X-ray intensity is prepared from the measurement values. Further, the fluorescent X-ray intensity of the film A is measured by the fluorescent X-ray analyzer, and the measured value (fluorescent X-ray intensity) is fitted on the calibration curve (graph). Thus, the manganese content of the film A on the manganese atom weight basis is determined. The zirconium content of the film A on the zirconium atom weight basis is determined in substantially the same manner as described above.

The chemically formed film A is pale yellow or yellow. Therefore, it is easy to visually check the presence of the film A on the aluminum-based metal component. Further, the film A is free from deterioration in adhesion to the aluminum-based metal component, which may otherwise occur due to heat applied for vulcanization of the rubber. In addition, the film A is excellent in followability to deformation of the aluminum-based metal component.

The chemically formed film A further contains aluminum (a constituent of the aluminum-based metal component) and fluorine (a constituent of a treatment agent employed for the formation of the film A as will be described later in detail according to the present invention) in addition to the manganese oxide and the zirconium oxide. Where the aluminum-based metal component is composed of the aluminum alloy, elements (e.g., magnesium, silicon and the like) of the aluminum alloy may also be present in the film A. These elements are supposedly introduced together with aluminum into the film A during the formation of the film A. The composition of the film A is determined by an ICP (inductively coupled plasma) luminescent analyzing method.

In order to improve the followability of the film A to the deformation of the aluminum-based metal component, the film A preferably has a mass of 0.3 to 5.0 g/m². The mass of the film A is determined in the following manner. First, the aluminum-based metal component formed with the film A is immersed in nitric acid for removal of the film A, and then the mass of the resulting aluminum-based metal component is measured. The mass of the film A is determined by comparison between the masses measured before and after the immersion of the aluminum-based metal component.

The cylindrical bush is produced in the following manner. First, an inner metal tube 2 and an outer metal tube 3 are each treated with the following inventive treatment agent for formation of a film A. The treatment agent contains 0.1 to 0.3 g/liter of potassium permanganate, and 0.05 to 0.2 g/liter of zircon hydrofluoric acid/hydrogen fluoride containing zircon hydrofluoric acid and hydrogen fluoride in a mass ratio of 1:1. The treatment agent is typically prepared by mixing a potassium permanganate aqueous solution and a zircon hydrofluoric acid/hydrogen fluoride aqueous solution.

For the formation of the film A, the surface of each of the inner and outer metal tubes 2, 3 of aluminum or the aluminum alloy is kept in contact with the treatment agent at pH 2.5 to 4 for a period of 1 to 10 minutes, for example, by immersing the metal tubes 2, 3 in the treatment agent. If the pH of the treatment agent falls outside the range of 2.5 to 4 in the formation of the film A, an etching reaction of the metal tube 2, 3 with hydrogen fluoride in the treatment agent is liable to be suppressed, resulting in improper formation of the film A. When the potassium permanganate aqueous solution and the zircon hydrofluoric acid/hydrogen fluoride aqueous solution are mixed in the preparation of the treatment liquid, the pH of the resulting treatment agent is about 2.5. Therefore, there is no need to reduce the pH of the treatment agent to a level lower than 2.5. Where the pH of the treatment agent is to be increased to a level higher than 2. 5, ammonia water, for example, may be added to the treatment agent. If a contact period during which the metal tubes 2, 3 are kept in contact with the treatment agent is 1 to 10 minutes, the formation of the film A reaches a plateau. Therefore, a contact period greater than the aforesaid range is industrially meaningless. If the contact period is less than 1 minute, the manganese content of the film A is less than the intended level (i.e., less than 10 mg/m² on a manganese atom weight basis) , so that the adhesion between the vibration damping rubber 1 and the metal tubes 2, 3 is insufficient.

Where the potassium permanganate and the zircon hydrofluoric acid/hydrogen fluoride are present in the treatment agent in a concentration ratio of 1:0.5 to 1:1 (g/liter), the film A can be chemically formed efficiently. Where the treatment agent is kept at a temperature of 35 to 60°C, the chemically formed film A is more excellent in followability to the deformation of the metal tubes 2, 3.

In the formation of the film A, the surfaces of the metal tubes 2, 3 are kept in contact with the treatment agent typically by immersing the metal tubes 2, 3 in the treatment agent. However, the treatment agent may be applied or' sprayed over the surfaces of the metal tubes 2, 3.

Prior to the formation of the film A (before the metal tubes 2, 3 are brought into contact with the treatment agent) , the following process may be performed as required. The metal tubes 2, 3 are immersed in a hot alkali degreasing agent, whereby the entire surfaces of the metal tubes 2, 3 are degreased. Then, the entire surfaces of the metal tubes 2, 3 are roughened through a blast process so as to be imparted with a ten-point average surface roughness (Rz; Japanese Industrial Standards) of about 10 to about 30 µm. In turn, the metal tubes 2, 3 are degreased in the same manner as described above, and rinsed with water in a water bath. Thus, the adhesion of the chemically formed film A to the metal tubes 2, 3 is improved.

After the film formation, the metal tubes 2, 3 are rinsed with cold water and hot water, and then dried, as required.

After the film A is formed on the entire surfaces of the respective inner and outer metal tubes 2, 3, an adhesive is applied onto the outer peripheral surface of the inner metal tube 2 and the inner peripheral surface of the outer metal tube 3 respectively formed with the film A, for example, by spraying. Thus, adhesive layers C are formed on the outer peripheral surface of the inner metal tube 2 and the inner peripheral surface of the outer metal tube 3 as each having a thickness of about 5 to about 20 µm. Then, the inner metal tube 2 and the outer metal tube 3 are placed coaxially with each other in a mold, and an unvulcanized rubber as a material for the vibration damping rubber 1 is filled in a space defined by the inner metal tube 2, the outer metal tube 3 and the mold, and then vulcanized at 140°C to 200°C for about 5 to about 60 minutes. After the resulting product is demolded, a diameter reduction process is performed by applying a pressure to the outer peripheral surface of the outer metal tube 3 from the outside, whereby the outer metal tube 3 is pressed toward the inner metal tube 2 so as to have a reduced diameter (a diameter reduced by about 10% of the original diameter of the outer metal tube 3). Thus, the cylindrical bush is produced.

In the production of the cylindrical bush, the chemically formed film A is free from deterioration in adhesion to the inner and outer metal tubes 2, 3 even if the unvulcanized rubber is heated for the vulcanization thereof. In addition, even if the outer metal tube 3 is subjected to the diameter reduction process, the film A follows the deformation of the outer metal tube 3 occurring due to the diameter reduction process and, therefore, is free from cracking and separation. Therefore, adhesion between the vibration damping rubber 1 and the inner and outer metal tubes 2, 3 of the cylindrical bush is maintained for a prolonged period. Thus, the cylindrical bush serves its vibration damping function for a prolonged period, and has excellent corrosion resistance.

Next, materials to be employed for formation of the vibration damping rubber 1, the inner and outer metal tubes 2, 3 and the adhesive layers C in the aforementioned production method will be described.

Typical examples of the material for the vibration damping rubber 1 include natural rubber (NR), butadiene rubber (BR), styrene butadiene rubber (SBR), isoprene rubber (IR), acrylonitrile butadiene rubber (NBR), carboxyl-modified NBR, chloroprene rubber (CR), ethylene propylene rubber (EPM, EPDM), maleic acid-modified EPM, butyl rubber (IIR), halogenated IIR, chlorosulfonated polyethylene (CSM), fluorinated rubber (FKM), acryl rubber and epichlorohydrin rubber, which may be used either alone or in combination. As required, a reinforcement agent such as carbon black, a vulcanizing agent, a vulcanization accelerating agent, a lubricant, an auxiliary agent, a plasticizer and an anti-aging agent may be added to the rubber material to impart a desired property to the rubber material.

The material for the inner and outer metal tubes 2, 3 is not particularly limited, as long as the material is an aluminum-based metal such as an aluminum alloy or aluminum. Examples of the aluminum-based metal include A1000 to A7000 series, AC series and ADC series.

The adhesive to be employed for the formation of the adhesive layer C is not particularly limited, but a commercially available adhesive may be used. Specific examples of the adhesive include CHEMLOCK 205 (available from Lord Corporation) and CHEMLOCK 6108 (available from Lord Corporation), which may be used either alone or in combination.

In this embodiment, the automotive cylindrical bush has been explained as the inventive rubber member including the aluminum-based metal component, but the rubber member is not limited to the cylindrical bush. Other examples of the rubber member include vibration damping members such as non-cylindrical bushes, engine mounts and motor mounts to be used for automobiles, transport systems (including airplanes, industrial transporters such as fork lifts, shovel cars, cranes, railcars and the like), industrial machines and other machinery. The shape of the aluminum-based metal component is not limited to the cylindrical shape, but may be any of various shapes including a planar shape and a corrugated shape. Where the shape of the aluminum-based metal component is planar or corrugated, the rubber is typically sandwiched between two such aluminum-based metal components, but may be provided on a single such aluminum-based metal component.

Next, examples of the present invention will be described in conjunction with comparative examples. However, it should be understood that the invention be not limited to the inventive examples.

### Example 1

### Aluminum-based metal component

A plate of an aluminum alloy A6063 (having a size of 25.4 mm × 60 mm × 3 mm (thickness)) was prepared as an aluminum-based metal component.

### Treatment agent for film formation

First, 5.0 g of a 2 wt% potassium permanganate aqueous solution and 5.0 g of a 1 wt% zircon hydrofluoric acid/hydrogen fluoride aqueous solution (containing zircon hydrofluoric acid and hydrogen fluoride in a weight ratio of 1:1) were mixed, and the resulting solution mixture was diluted so as to have a potassium permanganate concentration of 0.1 g/liter and a zircon hydrofluoric acid/hydrogen fluoride concentration of 0.05 g/liter. Thus, a treatment agent for film formation was prepared, which had a pH of 3.2.

### Formation of film

First, the aluminum-based metal component (plate) was immersed in an alkali degreasing agent heated to 60°C for degreasing the entire surface thereof. In turn, the degreased surface was roughened by a shot blasting process so as to be imparted with a ten-point average surface roughness (Rz) of 20 µm. After the surface was degreased in the same manner as described above, the aluminum-based metal component was rinsed with water in a water bath. Then, the aluminum-based metal component was immersed in the treatment agent at 40°C for three minutes. Thus, a film was chemically formed on the surface of the aluminum-based metal component. After the aluminum-based metal component was taken out of the treatment agent and rinsed with water in a water bath, the component was dried at 80°C for 10 minutes. The ten-point average surface roughness (Rz) of the component was measured by a surface roughness meter SURCOM 1400D available from Tokyo Seimitsu Co., Ltd.

The chemically formed film contained manganese oxide and zirconium oxide. In the film, the content of manganese from the manganese oxide was 13.5 mg/m² on a manganese atom weight basis, and the content of zirconium from the zirconium oxide was 22. 9 mg/m² on a zirconium atom weight basis. The chemically formed film had a mass of 2.6 g/m², and was yellow. The manganese content of the film on the manganese atom weight basis and the zirconium content of the film on the zirconium atom weight basis were each determined by measuring a fluorescent X-ray intensity by means of a wavelength dispersive fluorescent X-ray analyzer, and fitting the measured fluorescent X-ray intensity on a preliminarily prepared calibration curve. The mass of the film was determined by immersing the aluminum-based metal component formed with the film in 10% nitric acid for 30 minutes, and comparing the masses of the aluminum-based metal component measured before and after the immersion. The color of the film was visually checked.

### Example 2

### Treatment agent for film formation

First, 5.0 g of a 2 wt% potassium permanganate aqueous solution and 10.0 g of a 1 wt% zircon hydrofluoric acid/hydrogen fluoride aqueous solution (containing zircon hydrofluoric acid and hydrogen fluoride in a weight ratio of 1:1) were mixed, and the resulting solution mixture was diluted so as to have a potassium permanganate concentration of 0.1 g/liter and a zircon hydrofluoric acid/hydrogen fluoride concentration of 0.1 g/liter. Thus, a treatment agent for film formation was prepared, which had a pH of 2.7.

### Formation of film

A film was chemically formed on an aluminum-based metal component (plate) in substantially the same manner as in Example 1, except that the aluminum-based metal component was immersed in the thus prepared treatment agent at 40°C for three minutes.

In the chemically formed film, the content of manganese from the manganese oxide was 12.5 mg/m² on a manganese atom weight basis, and the content of zirconium from the zirconium oxide was 26.8 mg/m² on a zirconium atom weight basis. The chemically formed film had a mass of 2.2 g/m², and was yellow.

### Example 3

### Treatment agent for film formation

First, 5.0 g of a 2 wt% potassium permanganate aqueous solution and 10.0 g of a 1 wt% zircon hydrofluoric acid/hydrogen fluoride aqueous solution (containing zircon hydrofluoric acid and hydrogen fluoride in a weight ratio of 1:1) were mixed. Then, the resulting solution mixture was diluted so as to have a potassium permanganate concentration of 0.1 g/liter and a zircon hydrofluoric acid/hydrogen fluoride concentration of 0.1 g/liter, and the pH thereof was adjusted to 4.0 by adding 28% ammonia water. Thus, a treatment agent for film formation was prepared.

### Formation of film

A film was chemically formed on an aluminum-based metal component (plate) in substantially the same manner as in Example 1, except that the aluminum-based metal component was immersed in the thus prepared treatment agent at 40°C for 1.5 minutes.

In the chemically formed film, the content of manganese from the manganese oxide was 12.2 mg/m² on a manganese atom weight basis, and the content of zirconium from the zirconium oxide was 26.0 mg/m² on a zirconium atom weight basis. The chemically formed film had a mass of 1.3 g/m², and was pale yellow.

### Example 4

### Treatment agent for film formation

First, 5.0 g of a 2 wt% potassium permanganate aqueous solution and 10.0 g of a 1 wt% zircon hydrofluoric acid/hydrogen fluoride aqueous solution (containing zircon hydrofluoric acid and hydrogen fluoride in a weight ratio of 1:1) were mixed. Then, the resulting solution mixture was diluted so as to have a potassium permanganate concentration of 0.1 g/liter and a zircon hydrofluoric acid/hydrogen fluoride concentration of 0.1 g/liter, and the pH thereof was adjusted to 4.0 by adding 28% ammonia water. Thus, a treatment agent for film formation was prepared.

### Formation of film

A film was chemically formed on an aluminum-based metal component (plate) in substantially the same manner as in Example 1, except that the aluminum-based metal component was immersed in the thus prepared treatment agent at 60°C for 1.5 minutes.

In the chemically formed film, the content of manganese from the manganese oxide was 12.5 mg/m² on a manganese atom weight basis, and the content of zirconium from the zirconium oxide was 34.7 mg/m² on a zirconium atom weight basis. The chemically formed film had a mass of 1.7 g/m², and was pale yellow.

### Example 5

### Treatment agent for film formation

First, 5.0 g of a 2 wt% potassium permanganate aqueous solution and 10.0 g of a 1 wt% zircon hydrofluoric acid/hydrogen fluoride aqueous solution (containing zircon hydrofluoric acid and hydrogen fluoride in a weight ratio of 1:1) were mixed, and then the resulting solution mixture was diluted so as to have a potassium permanganate concentration of 0.1 g/liter and a zircon hydrofluoric acid/hydrogen fluoride concentration of 0.1 g/liter. Thus, a treatment agent for film formation was prepared, which had a pH of 2.9.

### Formation of film

A film was chemically formed on an aluminum-based metal component (plate) in substantially the same manner as in Example 1, except that the aluminum-based metal component was immersed in the thus prepared treatment agent at 40°C for 10 minutes.

In the chemically formed film, the content of manganese from the manganese oxide was 27.0 mg/m² on a manganese atom weight basis, and the content of zirconium from the zirconium oxide was 33.0 mg/m² on a zirconium atom weight basis. The chemically formed film had a mass of 3.6 g/m², and was yellow.

### Example 6

### Treatment agent for film formation

First, 10.0 g of a 2 wt% potassium permanganate aqueous solution and 20. 0 g of a 1 wt% zircon hydrofluoric acid/hydrogen fluoride aqueous solution (containing zircon hydrofluoric acid and hydrogen fluoride in a weight ratio of 1:1) were mixed, and then the resulting solution mixture was diluted so as to have a potassium permanganate concentration of 0.2 g/liter and a zircon hydrofluoric acid/hydrogen fluoride concentration of 0.2 g/liter. Thus, a treatment agent for film formation was prepared, which had a pH of 2.6.

### Formation of film

A film was chemically formed on an aluminum-based metal component (plate) in substantially the same manner as in Example 1, except that the aluminum-based metal component was immersed in the thus prepared treatment agent at 40°C for 3 minutes.

In the chemically formed film, the content of manganese from the manganese oxide was 17.0 mg/m² on a manganese atom weight basis, and the content of zirconium from the zirconium oxide was 30.2 mg/m² on a zirconium atom weight basis. The chemically formed film had a mass of 1.9 g/m², and was pale yellow.

### Example 7

### Treatment agent for film formation

First, 15.0 g of a 2 wt% potassium permanganate aqueous solution and 20.0 g of a 1 wt% zircon hydrofluoric acid/hydrogen fluoride aqueous solution (containing zircon hydrofluoric acid and hydrogen fluoride in a weight ratio of 1:1) were mixed. Then, the resulting solution mixture was diluted so as to have a potassium permanganate concentration of 0.3 g/liter and a zircon hydrofluoric acid/hydrogen fluoride concentration of 0.2 g/liter, and the pH thereof was adjusted to 3.0 by adding 28% ammonia water. Thus, a treatment agent for film formation was prepared.

### Formation of film

A film was chemically formed on an aluminum-based metal component (plate) in substantially the same manner as in Example 1, except that the aluminum-based metal component was immersed in the thus prepared treatment agent at 40°C for 1.5 minutes.

In the chemically formed film, the content of manganese from the manganese oxide was 25.7 mg/m² on a manganese atom weight basis, and the content of zirconium from the zirconium oxide was 28.7 mg/m² on a zirconium atom weight basis. The chemically formed film had a mass of 1.5 g/m², and was yellow.

### Example 8

### Treatment agent for film formation

First, 15.0 g of a 2 wt% potassium permanganate aqueous solution and 3.0 g of a 1 wt% zircon hydrofluoric acid/hydrogen fluoride aqueous solution (containing zircon hydrofluoric acid and hydrogen fluoride in a weight ratio of 1:1) were mixed, and then the resulting solution mixture was diluted so as to have a potassium permanganate concentration of 0.3 g/liter and a zircon hydrofluoric acid/hydrogen fluoride concentration of 0.03 g/liter. Thus, a treatment agent for film formation was prepared, which had a pH of 3.3.

### Formation of film

A film was chemically formed on an aluminum-based metal component (plate) in substantially the same manner as in Example 1, except that the aluminum-based metal component was immersed in the thus prepared treatment agent at 40°C for 3 minutes.

In the chemically formed film, the content of manganese from the manganese oxide was 28.0 mg/m² on a manganese atom weight basis, and the content of zirconium from the zirconium oxide was 5.0 mg/m² on a zirconium atom weight basis. The chemically formed film had a mass of 2.9 g/m², and was yellow.

### Example 9

### Treatment agent for film formation

First, 10.0 g of a 2 wt% potassium permanganate aqueous solution and 25.0 g of a 1 wt% zircon hydrofluoric acid/hydrogen fluoride aqueous solution (containing zircon hydrofluoric acid and hydrogen fluoride in a weight ratio of 1:1) were mixed, and then the resulting solution mixture was diluted so as to have a potassium permanganate concentration of 0.2 g/liter and a zircon hydrofluoric acid/hydrogen fluoride concentration of 0.25 g/liter. Thus, a treatment agent for film formation was prepared, which had a pH of 2.6.

### Formation of film

A film was chemically formed on an aluminum-based metal component (plate) in substantially the same manner as in Example 1, except that the aluminum-based metal component was immersed in the thus prepared treatment agent at 40°C for 3 minutes.

In the chemically formed film, the content of manganese from the manganese oxide was 17.0 mg/m² on a manganese atom weight basis, and the content of zirconium from the zirconium oxide was 40.0 mg/m² on a zirconium atom weight basis. The chemically formed film had a mass of 1.5 g/m², and was pale yellow.

### Comparative Example 1

### Treatment agent for film formation

First, 2.0 g of a 2 wt% potassium permanganate aqueous solution and 10.0 g of a 1 wt% zircon hydrofluoric acid/hydrogen fluoride aqueous solution (containing zircon hydrofluoric acid and hydrogen fluoride in a weight ratio of 1:1) were mixed, and then the resulting solution mixture was diluted so as to have a potassium permanganate concentration of 0.04 g/liter and a zircon hydrofluoric acid/hydrogen fluoride concentration of 0.1 g/liter. Thus, a treatment agent for film formation was prepared, which had a pH of 2.7.

### Formation of film

A film was chemically formed on an aluminum-based metal component (plate) in substantially the same manner as in Example 1, except that the aluminum-based metal component was immersed in the thus prepared treatment agent at 40°C for 3 minutes.

In the chemically formed film, the content of manganese from the manganese oxide was 4.0 mg/m² on a manganese atom weight basis, and the content of zirconium from the zirconium oxide was 27.0 mg/m² on a zirconium atom weight basis. The chemically formed film had a mass of 2.1 g/m², and was slightly yellow.

### Comparative Example 2

### Treatment agent for film formation

First, 5.0 g of a 2 wt% potassium permanganate aqueous solution and 10.0 g of a 1 wt% zircon hydrofluoric acid/hydrogen fluoride aqueous solution (containing zircon hydrofluoric acid and hydrogen fluoride in a weight ratio of 1:1) were mixed. Then, the resulting solution mixture was diluted so as to have a potassium permanganate concentration of 0.1 g/liter and a zircon hydrofluoric acid/hydrogen fluoride concentration of 0.1 g/liter, and the pH thereof was adjusted to 4.5 by adding 28% ammonia water. Thus, a treatment agent for film formation was prepared.

### Formation of film

A film was chemically formed on an aluminum-based metal component (plate) in substantially the same manner as in Example 1, except that the aluminum-based metal component was immersed in the thus prepared treatment agent at 40°C for 3 minutes.

In the chemically formed film, the content of manganese from the manganese oxide was 5.0 mg/m² on a manganese atom weight basis, and the content of zirconium from the zirconium oxide was 40.0 mg/m² on a zirconium atom weight basis. The chemically formed film had a mass of 0.27 g/m², and was slightly yellow.

### Comparative Example 3

### Treatment agent for film formation

First, 5.0 g of a 2 wt% potassium permanganate aqueous solution and 10.0 g of a 1 wt% zircon hydrofluoric acid/hydrogen fluoride aqueous solution (containing zircon hydrofluoric acid and hydrogen fluoride in a weight ratio of 1:1) were mixed. Then, the resulting solution mixture was diluted so as to have a potassium permanganate concentration of 0.1 g/liter and a zircon hydrofluoric acid/hydrogen fluoride concentration of 0.1 g/liter, and the pH thereof was adjusted to 4.0 by adding 28% ammonia water. Thus, a treatment agent for film formation was prepared.

### Formation of film

A film was chemically formed on an aluminum-based metal component (plate) in substantially the same manner as in Example 1, except that the aluminum-based metal component was immersed in the thus prepared treatment agent at 40°C for 0.75 minutes.

In the chemically formed film, the content of manganese from the manganese oxide was 9.0 mg/m² on a manganese atom weight basis, and the content of zirconium from the zirconium oxide was 15.0 mg/m² on a zirconium atom weight basis. The chemically formed film had a mass of 0.23 g/m², and was slightly yellow.

### Comparative Example 4

### Treatment agent for film formation

First, 5.0 g of a 2 wt% potassium permanganate aqueous solution and 25. 0 g of a 1 wt% zircon hydrofluoric acid/hydrogen fluoride aqueous solution (containing zircon hydrofluoric acid and hydrogen fluoride in a weight ratio of 1:1) were mixed, and then the resulting solution mixture was diluted so as to have a potassium permanganate concentration of 0.1 g/liter and a zircon hydrofluoric acid/hydrogen fluoride concentration of 0.25 g/liter. Thus, a treatment agent for film formation was prepared, which had a pH of 2.8.

### Formation of film

A film was chemically formed on an aluminum-based metal component (plate) in substantially the same manner as in Example 1, except that the aluminum-based metal component was immersed in the thus prepared treatment agent at 40°C for 3 minutes.

In the chemically formed film, the content of manganese from the manganese oxide was 9.7 mg/m² on a manganese atom weight basis, and the content of zirconium from the zirconium oxide was 36. 1 mg/m² on a zirconium atom weight basis. The chemically formed film had a mass of 0.52 g/m², and was colorless.

### Comparative Example 5

### Treatment agent for film formation

First, 10.0 g of a 2 wt% potassium permanganate aqueous solution and 30.0 g of a 1 wt% zircon hydrofluoric acid/hydrogen fluoride aqueous solution (containing zircon hydrofluoric acid and hydrogen fluoride in a weight ratio of 1:1) were mixed, and then the resulting solution mixture was diluted so as to have a potassium permanganate concentration of 0.2 g/liter and a zircon hydrofluoric acid/hydrogen fluoride concentration of 0.3 g/liter. Thus, a treatment agent for film formation was prepared, which had a pH of 2.7.

### Formation of film

A film was chemically formed on an aluminum-based metal component (plate) in substantially the same manner as in Example 1, except that the aluminum-based metal component was immersed in the thus prepared treatment agent at 40°C for 3 minutes.

In the chemically formed film, the content of manganese from the manganese oxide was 17.3 mg/m² on a manganese atom weight basis, and the content of zirconium from the zirconium oxide was 49.8 mg/m² on a zirconium atom weight basis. The chemically formed film had a mass of 0.53 g/m², and was colorless.

### Comparative Example 6

### Treatment agent for film formation

First, 10.0 g of a 2 wt% potassium permanganate aqueous solution and 2.0 g of a 1 wt% zircon hydrofluoric acid/hydrogen fluoride aqueous solution (containing zircon hydrofluoric acid and hydrogen fluoride in a weight ratio of 1:1) were mixed. Then, the resulting solution mixture was diluted so as to have a potassium permanganate concentration of 0.2 g/liter and a zircon hydrofluoric acid/hydrogen fluoride concentration of 0.02 g/liter, and the pH thereof was adjusted to 4.0 by adding 28% ammonia water. Thus, a treatment agent for film formation was prepared.

### Formation of film

A film was chemically formed on an aluminum-based metal component (plate) in substantially the same manner as in Example 1, except that the aluminum-based metal component was immersed in the thus prepared treatment agent at 40°C for 3 minutes.

In the chemically formed film, the content of manganese from the manganese oxide was 12.0 mg/m² on a manganese atom weight basis, and the content of zirconium from the zirconium oxide was 3.0 mg/m² on a zirconium atom weight basis. The chemically formed film had a mass of 0.25 g/m², and was slightly yellow.

### Comparative Example 7

### Treatment agent for film formation

First, 20.0 g of a 2 wt% potassium permanganate aqueous solution and 10.0 g of a 1 wt% zircon hydrofluoric acid/hydrogen fluoride aqueous solution (containing zircon hydrofluoric acid and hydrogen fluoride in a weight ratio of 1:1) were mixed, and then the resulting solution mixture was diluted so as to have a potassium permanganate concentration of 0.4 g/liter and a zircon hydrofluoric acid/hydrogen fluoride concentration of 0.1 g/liter. Thus, a treatment agent for film formation was prepared, which had a pH of 2.7.

### Formation of film

A film was chemically formed on an aluminum-based metal component (plate) in substantially the same manner as in Example 1, except that the aluminum-based metal component was immersed in the thus prepared treatment agent at 40°C for 3 minutes.

In the chemically formed film, the content of manganese from the manganese oxide was 35.0 mg/m² on a manganese atom weight basis, and the content of zirconium from the zirconium oxide was 19. 0 mg/m² on a zirconium atom weight basis. The chemically formed film had a mass of 2.5 g/m², and was yellow.

### Preparation of test samples

The aluminum-based metal components (plates) respectively formed with the films in Examples 1 to 9 and Comparative Examples 1 to 7 were each masked with a mask with a center portion (25.4 mm × 25.4 mm) of one surface thereof being exposed, and an adhesive CHEMLOCK 205 (available from Lord Corporation) and then an adhesive CHEMLOCK 6108 (available from Lord Corporation) were sprayed over the center portion. Then, the adhesives were dried at 60°C for 10 minutes, and the mask was removed. Thus, an adhesive layer (25.4 mm × 25.4 mm × 20 µm (thickness)) was formed. The following unvulcanized rubber was applied on a surface of the adhesive layer on the aluminum-based metal component (plate) in a mold, and pressed to be vulcanized at 150°C for 20 minutes. Thus, a planar rubber (having a thickness of 5 mm) was formed unitarily with the aluminum-based metal component (plate). Thus, test samples were provided, on which the following performance tests were performed.

### Unvulcanized rubber

The unvulcanized rubber was prepared by mixing 100 parts by weight of natural rubber, 35 parts by weight of HAF (High Abrasion Furnace) carbon black (SEAST 3 available from Tokai Carbon Co., Ltd.), 5 parts by weight of zinc oxide (Zinc Oxide Type-I available from Sakai Chemical Industry Co., Ltd.), 2 parts by weight of stearic acid (LUNAK S-30 available from Kao Corporation), 0.7 parts by weight of a vulcanization accelerating agent (SOXINOL CZ available from Sumitomo Chemical Co., Ltd.) and 2 parts by weight of sulfur (SULFUX 200S available from Tsurumi Chemical Industry Co., Ltd.) and kneading the resulting mixture by means of a kneader and a kneading roll. Thus, the unvulcanized rubber was prepared.

### Performance tests

### Initial adhesion

Ends of the aluminum-based metal component (plate) and the rubber of each of the test samples of Examples 1 to 9 and Comparative Examples 1 to 7 thus obtained were clamped by chucks of a tensile tester (available from Orientech Incorporated), and pulled away from each other at a pulling rate of 50 mm/minute for a 90-degree peeling test. Then, a load (per 25.4 mm (= 1 inch), N/25.4 mm) was measured when the test sample was broken, and a broken section was visually observed. The results are shown in Tables 1 to 3. In Tables 1 to 3, "R100" means that 100% of the broken section was present in the rubber, and "R95M5" means that 95% of the broken section was present in the rubber and 5% of the broken section was present in an interface between the rubber and the aluminum-based metal component (plate).

### Adhesion after spray of salt water

By pulling the rubber of each of the test samples away from the aluminum-based metal component (plate) , the rubber was stretched by 25%. In this state, a 5% sodium chloride aqueous solution at 35°C was continuously sprayed over each of the test samples for 1000 hours. Then, the 90-degree peeling test was performed in the same manner as described above. A load was measured when the test sample was broken, and a broken section was visually observed. The results are shown in Tables 1 to 3.

### Adhesion after immersion in test liquid

Test samples were each prepared in substantially the same manner as described above, except that the rubber had a thickness of 2 mm. The test samples thus prepared were each immersed in a test liquid (a solution mixture containing 70 parts by weight of ethylene glycol and 30 parts by weight of propylene glycol) for 360 hours, and then the 90-degree peeling test was performed in the same manner as described above. A load was measured when the test sample was broken, and a broken section was visually observed. The results are shown in Tables 1 to 3.

**Table 1**

| | Example | | | | | | |
|---|---|---|---|---|---|---|---|
| | 1 | 2 | 3 | 4 | 5 | 6 | 7 |
| Treatment agent | | | | | | | |
| Potassium permanganate (g/L) | 0.1 | 0.1 | 0.1 | 0.1 | 0.1 | 0.2 | 0.3 |
| Zircon hydrofluoric acid / hydrogen fluoride (g/L) | 0.05 | 0.1 | 0.1 | 0.1 | 0.1 | 0.2 | 0.2 |
| Concentration (g/L) ratio | 1:0.5 | 1:1 | 1:1 | 1:1 | 1:1 | 1:1 | 1:0.67 |
| pH | 3.2 | 2.7 | 4.0 | 4.0 | 2.9 | 2.6 | 3.0 |
| Temperature (°C) | 40 | 40 | 40 | 60 | 40 | 40 | 40 |
| Immersion period (min) | 3 | 3 | 1.5 | 1.5 | 10 | 3 | 1.5 |
| Chemically formed film | | | | | | | |
| Color | Yellow | Yellow | Pale yellow | Pale yellow | Yellow | Pale Yellow | Yellow |
| Visibility | O | O | O | O | O | O | O |
| Mass(g/m²) | 2.6 | 2.2 | 1.3 | 1.7 | 3.6 | 1.9 | 1.5 |
| Mn content (mg/m²) | 13.5 | 12.5 | 12.2 | 12.5 | 27.0 | 17.0 | 25.7 |
| Zr content (mg/m²) | 22.9 | 26.8 | 26.0 | 34.7 | 33.0 | 30.2 | 28.7 |
| Adhesion | | | | | | | |
| Initial stage | | | | | | | |
| Load (*1) | 520 | 550 | 550 | 540 | 530 | 490 | 490 |
| Broken state | R100 | R100 | R100 | R100 | R100 | R100 | R100 |
| After spray of salt water | | | | | | | |
| Load (*1) | 490 | 600 | 540 | 550 | 520 | 500 | 420 |
| Broken state | R100 | R100 | R100 | R100 | R100 | R100 | R100 |
| After immersion in test liquid | | | | | | | |
| Load (*1) | 100 | 90 | 120 | 110 | 90 | 110 | 120 |
| Broken state | R100 | R100 | R100 | R100 | R100 | R100 | R100 |

| | | | | | | | |
|---|---|---|---|---|---|---|---|
| (*1) Unit: N/25.4 mm | | | | | | | |

**Table 2**

| | Example | |
|---|---|---|
| | 8 | 9 |
| Treatment agent | | |
| Potassium permanganate (g/L) | 0.3 | 0.2 |
| Zircon hydrofluoric acid / hydrogen fluoride (g/L) | 0.03 | 0.25 |
| Concentration (g/L) ratio | 1:0.1 | 1:1.25 |
| pH | 3.3 | 2.6 |
| Temperature (°C) | 40 | 40 |
| Immersion period (min) | 3 | 3 |
| Chemically formed film | | |
| Color | Yellow | Pale yellow |
| Visibility | O | O |
| Mass (g/m²) | 2.9 | 1.5 |
| Mn content (mg/m²) | 28.0 | 17.0 |
| Zr content (mg/m²) | 5.0 | 40.0 |
| Adhesion | | |
| Initial stage | | |
| Load (*1) | 460 | 470 |
| Broken state | R100 | R100 |
| After spray of salt water | | |
| Load (*1) | 450 | 440 |
| Broken state | R100 | R100 |
| After immersion in test liquid | | |
| Load (*1) | 100 | 90 |
| Broken state | R100 | R100 |

| | | |
|---|---|---|
| (*1) Unit: N/25.4 mm | | |

**Table 3**

| | Comparative Example | | | | | | |
|---|---|---|---|---|---|---|---|
| | 1 | 2 | 3 | 4 | 5 | 6 | 7 |
| Treatment agent | | | | | | | |
| Potassium permanganate (g/L) | 0.04 | 0.1 | 0.1 | 0.1 | 0.2 | 0.2 | 0.4 |
| Zircon hydrofluoric acid / hydrogen fluoride (g/L) | 0.1 | 0.1 | 0.1 | 0.25 | 0.3 | 0.02 | 0.1 |
| Concentration (g/L) ratio | 1:2.5 | 1:1 | 1:1 | 1:2.5 | 1:1.5 | 1:0.1 | 1:0.25 |
| pH | 2.7 | 4.5 | 4.0 | 2.8 | 2.7 | 4.0 | 2.7 |
| Temperature (°C) | 40 | 40 | 40 | 40 | 40 | 40 | 40 |
| Immersion period (min) | 3.0 | 3.0 | 0.75 | 3.0 | 3.0 | 3.0 | 3.0 |
| Chemically formed film | | | | | | | |
| Color | Slightly yellow | Slightly yellow | Slightly yellow | Colorless | Colorless | Slightly Yellow | Yellow |
| Visibility | × | × | × | × | × | × | O |
| Mass (g/m²) | 2.1 | 0.27 | 0.23 | 0.52 | 0.53 | 0.25 | 2.5 |
| Mn content (mg/m²) | 4.0 | 5.0 | 9.0 | 9.7 | 17.3 | 12.0 | 35.0 |
| Zr content (mg/m²) | 27.0 | 40.0 | 15.0 | 36.1 | 49.8 | 3.0 | 19.0 |
| Adhesion | | | | | | | |
| Initial stage | | | | | | | |
| Load (*1) | 460 | 450 | 530 | 500 | 420 | 440 | 480 |
| Broken state | R100 | R100 | R100 | R100 | R100 | R100 | R95M5 |
| After spray of salt water | | | | | | | |
| Load (*1) | 460 | 440 | 420 | 480 | 410 | 430 | 400 |
| Broken state | R100 | R100 | R100 | R100 | R100 | R100 | R95M5 |
| After immersion in test liquid | | | | | | | |
| Load (*1) | 100 | 117 | 120 | 100 | 110 | 100 | 100 |
| Broken state | R100 | R90M10 | R90M10 | R100 | R100 | R90M10 | R90M10 |

| | | | | | | | |
|---|---|---|---|---|---|---|---|
| (*1) Unit: N/25.4 mm | | | | | | | |

The results shown in Tables 1 to 3 indicate that the test samples of Examples 1 to 9 were each excellent in adhesion between the aluminum-based metal component and the rubber, because the broken section thereof was present in the rubber. Even after the spray of the salt water (corrosion test) and the immersion in the test liquid, the surface of the aluminum-based metal component combined with the rubber was free from corrosion, because the test samples were excellent in adhesion. In Examples 1 to 9, the chemically formed films were pale yellow or yellow, so that the presence of the films was easily visually checked (the chemically formed films were excellent in visibility as indicated by O in Tables 1 and 2). This is because the content of manganese from the manganese oxide was 10 to 30 mg/m² on a manganese atom weight basis and the content of zirconium from the zirconium oxide was 5 to 40 mg/m² on a zirconium atom weight basis in each of the chemically formed films.

In contrast, the manganese content and the zirconium content of each of the chemically formed films fall outside the aforementioned ranges in Comparative Examples 1 to 7. Therefore, Comparative Examples 1 to 7 were inferior in the following points. In Comparative Examples 1 to 6, the chemically formed films were colorless or slightly yellow. Therefore, it was difficult to visually check the presence of the films (the chemically formed films were inferior in visibility as indicated by × in Table 3). In addition, Comparative Examples 2, 3 and 6 were inferior in adhesion after the immersion in the test liquid. Further, Comparative Example 7 was inferior in initial adhesion, adhesion after the spray of the salt water and adhesion after the immersion in the test liquid.

## Claims

1. A rubber member comprising:
an aluminum-based metal component composed of one of aluminum and an aluminum alloy;
a film (A) chemically formed on a surface of the aluminum-based metal component; and
a rubber combined with the aluminum-based metal component with intervention of the chemically formed film (A) ;
wherein the chemically formed film (A) comprises manganese oxide and zirconium oxide, manganese from the manganese oxide being present in a content of 10 to 30 mg/m² on a manganese atom weight basis in the film (A), zirconium from the zirconium oxide being present in a content of 5 to 40 mg/m² on a zirconium atom weight basis in the film (A).

2. A rubber member as set forth in claim 1,
wherein the aluminum-based metal component has a double tube structure including an inner metal tube and an outer metal tube having different outer diameters,
wherein an outer peripheral surface of the inner metal tube and an inner peripheral surface of the outer metal tube are each provided with the film (A), and
wherein the rubber is provided between the inner metal tube and the outer metal tube, and the outer metal tube has a reduced diameter portion.

3. A production method for a rubber member including an aluminum-based metal component, the method comprising the steps of:
preparing an aluminum-based metal component composed of one of aluminum and an aluminum alloy;
chemically forming a film (A) on a surface of the aluminum-based metal component by keeping the surface of the aluminum-based metal component in contact with a treatment agent (B) kept at pH 2.5 to 4 for a period of 1 to 10 minutes; and
forming a rubber on the surface of the aluminum-based metal component formed with the film (A),
wherein the chemically formed film (A) comprises manganese oxide and zirconium oxide, manganese from the manganese oxide being present in a content of 10 to 30 mg/m² on a manganese atom weight basis in the film (A), zirconium from the zirconium oxide being present in a content of 5 to 40 mg/m² on a zirconium atom weight basis in the film (A), and
wherein the treatment agent (B) comprises 0.1 to 0.3 g/liter of potassium permanganate, and 0.05 to 0.2 g/liter of zircon hydrofluoric acid/hydrogen fluoride containing zircon hydrofluoric acid and hydrogen fluoride in a mass ratio of 1:1.

4. A production method as set forth in claim 3, wherein the potassium permanganate and the zircon hydrofluoric acid/hydrogen fluoride are present in the treatment agent (B) in a concentration ratio of 1:0.5 to 1:1 (g/liter).

5. A production method as set forth in claim 3 or 4, wherein the treatment agent (B) is kept at a temperature of 35 to 60°C.

6. A production method as set forth in any one of claims 3 to 5,
wherein an aluminum-based inner metal tube and an aluminum-based outer metal tube having different outer diameters are prepared as the aluminum-based metal component in the preparing step,
wherein the film (A) is formed on each of an outer peripheral surface of the inner metal tube and an inner peripheral surface of the outer metal tube in the film forming step, and
wherein the inner metal tube and the outer metal tube are combined into a double tube structure, and the rubber is formed between the inner metal tube and the outer metal tube in the rubber forming step,
the production method further comprising the step of pressing the outer metal tube toward the inner metal tube to reduce the diameter of the outer metal tube.

## Patentansprüche

1. Gummielement, umfassend:
einen Metallbestandteil auf Basis von Aluminium, der aus einem, Aluminium und einer Aluminiumlegierung besteht;
einen chemisch auf der Oberfläche des Bestandteils auf Basis von Aluminium gebildeten Beschichtungsfilm (A); und
einen mit dem Bestandteil auf Basis von Aluminium kombinierten Gummi, mit dazwischen Einfügen des chemisch gebildeten Beschichtungsfilms (A);
wobei der chemisch gebildete Beschichtungsfilm (A) Manganoxid und Zirkoniumoxid umfasst, wobei das Mangan des Manganoxids mit einem Gehalt von 10 bis 30 mg/m², auf Basis des Mangan-Atomgewichts, in dem Beschichtungsfilm (A) vorliegt, und
das Zirkonium des Zirkoniumoxids mit einem Gehalt von 5 bis 40 mg/m², auf Basis des Zirkonium-Atomgewichts, in dem Beschichtungsfilm vorliegt.

2. Gummielement nach Anspruch 1, wobei der Metallbestandteil auf Basis von Aluminium eine Doppel-Rohrstruktur aufweist, die ein inneres Metallrohr und ein äußeres Metallrohr mit unterschiedlichen Außendurchmessern aufweist,
wobei die äußere Umfangsfläche des inneren Metallrohrs und die innere Umfangsfläche des äußeren Metallrohrs jeweils mit dem Beschichtungsfilm (A) bereitgestellt werden, und
wobei der Gummi zwischen dem inneren Metallrohr und dem äußeren Metallrohr bereitgestellt wird, und das äußere Metallrohr einen verringerten Durchmesseranteil aufweist.

3. Herstellungsverfahren für ein Gummielement, das einen Metallbestandteil auf Basis von Aluminium einschließt, der aus einem, Aluminium und einer Aluminiumlegierung besteht, wobei das Verfahren die folgenden Schritte umfasst:
Herstellen des Metallbestandteils auf Basis von Aluminium, der aus einem, Aluminium und einer Aluminiumlegierung besteht;
chemisches Bilden des Beschichtungsfilms (A) auf der Oberfläche des Metallbestandteils auf Basis von Aluminium, indem die Oberfläche des Metallbestandteils auf Basis von Aluminium in Kontakt mit einem Behandlungsmittel (B) gehalten wird, gehalten bei pH 2,5 bis 4 für eine Dauer von 1 bis 10 Minuten; und
Ausbilden des Gummis auf der Oberfläche des Metallbestandteils auf Basis von Aluminium, die mit dem Beschichtungsfilm (A) ausgebildet ist,
wobei der chemisch gebildete Beschichtungsfilm (A) Manganoxid und Zirkoniumoxid umfasst, wobei das Mangan des Manganoxids mit einem Gehalt von 10 bis 30 mg/m², auf Basis des Mangan-Atomgewichts, in dem Beschichtungsfilm (A) vorliegt, und
das Zirkonium des Zirkoniumoxids mit einem Gehalt von 5 bis 40 mg/m², auf Basis des Zirkonium-Atomgewichts, in dem Beschichtungsfilm vorliegt, und
wobei das Behandlungsmittel (B) 0,1 bis 0,3 g/Liter Kaliumpermanganat umfasst, und 0,05 bis 0,2 g/Liter Zirkon-Fluorwasserstoffsäure/Fluorwasserstoff, wobei die Zirkon-Fluorwasserstoffsäure und der Fluorwasserstoff in einem Massenverhältnis von 1:1 enthalten sind.

4. Herstellungsverfahren nach Anspruch 3, wobei das Kaliumpermanganat und Zirkon-Fluorwasserstoffsäure/Fluorwasserstoff in dem Behandlungsmittel (B) in einem Konzentrationsverhältnis von 1:0,5 bis 1:1 (g/Liter) vorliegen.

5. Herstellungsverfahren nach Anspruch 3 oder 4, wobei das Behandlungsmittel (B) bei einer Temperatur von 35 bis 60°C gehalten wird.

6. Herstellungsverfahren nach einem der Ansprüche 3 bis 5, wobei ein innere Metallrohr auf Basis von Aluminium und ein äußeres Metallrohr auf Basis von Aluminium mit unterschiedlichen Außendurchmessern als Metallbestandteil auf Basis von Aluminium in dem Herstellungsschritt hergestellt werden,
wobei der Beschichtungsfilm (A) auf jeder äußeren Umfangsfläche des inneren Metallrohrs und auf jeder inneren Umfangsfläche des äußeren Metallrohrs in dem Schritt des Bildens des Beschichtungsfilms (A) ausgebildet wird, und
wobei das innere Metallrohr und das äußere Metallrohr zu einer Doppel-Rohrstruktur kombiniert werden und der Gummi zwischen dem inneren Metallrohr und dem äußeren Metallrohr in dem Schritt des Ausbildens des Gummis gebildet wird,
wobei das Herstellungsverfahren ferner einen Schritt des Pressens des äußeren Metallrohrs gegen das innere Metallrohr, zum Verringern des Durchmessers des äußeren Metallrohrs, umfasst.

## Revendications

1. Elément de caoutchouc comprenant :
un composant métallique à base d'aluminium, composé d'un aluminium et d'un alliage d'aluminium ;
un film (A) chimiquement formé sur une surface du composant métallique à base d'aluminium ; et
un caoutchouc combiné avec le composant métallique à base d'aluminium avec intervention du film chimiquement formé (A) ;
dans lequel le film chimiquement formé (A) comprend de l'oxyde de manganèse et de l'oxyde de zirconium, du manganèse provenant de l'oxyde de manganèse étant présent dans une teneur de 10 à 30 mg/m² sur une base du poids de l'atome de manganèse dans le film (A), le zirconium provenant de l'oxyde de zirconium étant présent dans une teneur en 5 à 40 mg/m² sur une base du poids de l'atome de zirconium dans le film (A).

2. Elément en caoutchouc selon la revendication 1, dans lequel le composant métallique à base d'aluminium a une structure à double tube comprenant un tube métallique interne et un tube métallique externe ayant des diamètres extérieurs différents,
dans lequel une surface périphérique extérieure du tube métallique interne et une surface périphérique intérieure du tube métallique externe sont chacun dotés du film (A) ; et
dans lequel le caoutchouc est fourni entre le tube métallique interne et le tube métallique externe, et le tube métallique externe a une partie de diamètre réduit.

3. Procédé de production d'un élément en caoutchouc comprenant un composant métallique à base d'aluminium, le procédé comprenant les étapes consistant à :
préparer un composant métallique à base d'aluminium, composé d'un aluminium et d'un alliage d'aluminium ;
former chimiquement un film (A) sur une surface du composant métallique à base d'aluminium, en maintenant la surface du composant métallique à base d'aluminium en contact avec un agent de traitement (B) maintenu à un pH de 2,5 à 4 pendant une période de 1 à 10 minutes ; et
former un caoutchouc sur la surface du composant de métal à base d'aluminium, formé avec le film (A),
dans lequel le film formé chimiquement (A) comprend de l'oxyde de manganèse et de l'oxyde de zirconium, du manganèse provenant de l'oxyde de manganèse étant présent dans une teneur en 10 à 30 mg/m², sur la base du poids de l'atome de manganèse dans le film (A), le zirconium provenant de l'oxyde de zirconium étant présent dans une teneur de 5 à 40 mg/m² sur la base du poids de l'atome de zirconium dans le film (A) et
dans lequel l'agent de traitement (B) comprend 0,1 à 0,3 g/litre de permanganate de potassium, et 0,05 à 0,2 g/litre d'acide fluorhydrique de zircone/fluorure d'hydrogène contenant de l'acide fluorhydrique de zircone et du fluorure d'hydrogène dans un rapport en masse de 1:1.

4. Procédé de production selon la revendication 3, dans lequel le permanganate de potassium et l'acide fluorhydrique de zircone/fluorure d'hydrogène sont présents dans l'agent de traitement (B), selon un rapport de concentration de 1:0,5 à 1:1 (g/litre).

5. Procédé de production selon les revendications 3 ou 4, dans lequel l'agent de traitement (B) est maintenu à une température de 35 à 60°C.

6. Procédé de production selon l'une quelconque des revendications 3 à 5,
dans lequel un tube métallique interne à base d'aluminium et un tube métallique externe à base d'aluminium ayant des diamètres extérieurs différents sont préparés comme le composant métallique à base d'aluminium dans l'étape de préparation,
dans lequel le film (A) est formé sur chacune parmi la surface périphérique externe du tube métallique interne et une surface périphérique interne du tube métallique externe dans l'étape de formation de film ; et
dans lequel le tube métallique interne et le tube métallique externe sont combinés en une structure à double tube, et le caoutchouc est formé entre le tube métallique interne et le tube métallique externe dans l'étape de formation de caoutchouc,
le procédé de production comprenant en outre l'étape consistant à comprimer le tube métallique externe vers le tube métallique interne pour réduire le diamètre du tube métallique externe.
